Europäisches Patentamt

European Patent Office

Office européen des brevets

(11) Publication number: **0 026 573**
**A1**

# EUROPEAN PATENT APPLICATION

(21) Application number: **80302851.3**

(22) Date of filing: **18.08.80**

(51) Int. Cl.³: **G 21 C 3/62**

(30) Priority: **17.08.79 US 67248**

(43) Date of publication of application:
**08.04.81 Bulletin 81/14**

(84) Designated Contracting States:
**BE CH DE FR GB IT LI SE**

(71) Applicant: WESTINGHOUSE ELECTRIC CORPORATION
Westinghouse Building Gateway Center
Pittsburgh Pennsylvania 15222(US)

(72) Inventor: Ward, Lewis Lyon
2255 Ramsey Road
Monroeville Pennsylvania(US)

(74) Representative: van Berlyn, Ronald
23 Centre Heights
London NW3 6JG(GB)

(54) **A mixed oxide fuel pellet for use in a nuclear reactor and a method of manufacturing such a pellet**

(57) Porous uranium dioxide pellets are fabricated and surface grinded to open pores near the pellet's surface. After impregnation with a plutonium bearing solution, the pellets are dried and heated to a temperature sufficient to convert the plutonium to plutonium dioxide.

EP 0 026 573 A1

PROCESS FOR MAKING MIXED OXIDE FUEL PELLETS

The present invention relates to fuel pellets and a method of manufacturing plutonium recycle fuel useful in nuclear reactors.

Mixed fuels adapted for use in nuclear reactors, include uranium dioxide and radioactive materials such as recycled plutonium from an operating reactor. These powders are batched together with recycled scrap powder, blended, milled and conveyed to manufacturing apparatus where pellet fabrication and sintering take place. The pellets are surface ground and eventually loaded into fuel tubes for installation as fuel rods in a reactor.

Since these process steps involve the handling and movement of radioactive material in both powder and pellet form, they must be carried out within shielded enclosures which confine the materials to precisely defined localized areas to help protect workers from neutron and gamma radiations. However, the complexity of different phases in the processes, such as batch processing, handling of dusty solids, intricate mechanical operations, and the like, taken together with the inaccessibility of process equipment, presents substantial problems of equipment operation and maintenance. Maintenance through glove ports and the use of other remotely operated parts helps relieve the maintenance problem somewhat, but much of the equipment is not acccessible thus requiring special procedures to remove it to special maintenance areas particularly designed for equipment repair purposes.

An important disadvantage is all of the piping and equipment cannot be completely emptied of radioactive powders. The powder particulates tend to adhere to the enclosure internal surfaces and to each other to eventually establish residual powder layers in the system. The powder further becomes lodged in inaccessible crevices and corners thus making its removal difficult, if not impossible. For these reasons, the background radiation levels may become high thus raising the possibility that the allowable radiation dose levels for workers may be exceeded if powder removal is not carried out on a regular basis.

It therefore is the principal object of the present invention to provide mixed and nuclear fuel pellets and a method of manufacturing mixed oxide fuel pellets which will eliminate the dusty conditions inherent in handling plutonium dioxide and uranium dioxide powders while alleviating the cost disadvantages of maintaining a powder type system and which reduces the level of exposure of workers to radiations from nuclear fuels together with reducing the size and complexity of the mixed oxide fuel fabrication facilities.

With this object in view, the present invention resides in a mixed oxide fuel pellet for use in a nuclear reactor comprising a sintered pellet of uranium dioxide having pores dispersed throughout its body to provide an amount of uniform open porosity, said pellet being surface ground to open and expose pores adjacent to the pellet cylindrical surface, characterized in that a radioactive fissile material occupies the pores near the pellet surface to thereby provide a pellet of mixed oxide fuel particularly adapted for use in a nuclear reactor.

The invention further resides in a method of fabricating a mixed oxide fuel pellet wherein a cylindrical uranium dioxide fuel pellet is first manufactured with a predetermined amount of porosity therein, and the pellet's cylindrical surface are ground to open the pores near the pellet surface, characterized in that the pellet is then exposed to a plutonium solution to cause the entry of plutonium into pores adjacent the pellet's cylindrical surface, whereupon the pellet is dried to remove any excess carrier solution from the pellet surfaces, and heated to a temperature sufficient to effect the conversion of plutonium to plutonium dioxide.

With this method any dry powdery operation is with material which is not radioactive. Only after the basic pellet is finished, radioactive material is applied in a simple process requiring only uncomplicated machinery.

To most effectively practice the invention, during fabrication of the uranium dioxide pellets, the uranium dioxide ceramic material before sintering is chosen to have particle sizes which provide pores in the pellets of varying sizes. However, they may also be of uniform size. The pores provide for a relatively low density pellet with a specified amount of porosity. This is accomplsihed by following conventional pellet fabrication practices. A pore former primarily acts to reduce dimensional instabilities resulting from pellet densification and pellet swelling when exposed to reactor irradiation. U.S. Patent 4,094,731, assigned to the same assignee as the present invention, extensively discloses procedures which may be followed in introducing pores into a uranium dioxide pellet. A pellet of, say, 90% theoretical density can be made to be completely stable and to accommodate any further densification which may take place under conditions of irradiation. When the pellet is also impregnated with plutonium to include, for example, 4% plutonium dioxide and still retain the same pellet geometry, the 90% dense uranium dioxide pellet becomes a 94% dense mixed oxide pellet, with the remaining 6% of its volume being voids. To achieve optimum impregnation, a uranium dioxide pellet having a density lower than 90% followed by final sintering is preferred when prepared for use as a mixed oxide pellet. Specifications for the final fuel density will vary because of the deployment of the fissile content which is near the cylindrical surface and it therefore will differ from present requirements for mixed oxide fuel. After sintering, the pellet contains voidage in the form of randomly distributed pores and the size can be varied according to the amount and characteristics of pore formers used. Since it is highly desirable to expose the maximum number of openings in the pellet's surface, the pellet is centerless ground to open up the porosity on the cylindrical surface, but the end surfaces on the opposite ends of the pellet are not ground and therefore remain relatively closed. The centerless grinding serves also to establish the diameter within dimensional specifications, as with the conventional fuel pellets.

After grinding is complete, the pellets are transferred to a plutonium facility and subjected to the plutonium impregnation process which serves to cause plutonium in solution to infiltrate into the pellet voids or pores. The process includes immersing or soaking the finished uranium dioxide pellets in a plutonium solution, followed by draining and rinsing the excess solution from the pellet's surface, drying, firing the pellet at relatively high temperatures, then performing non-destructive assaying and finally loading the pellets into fuel rods.

Several different kinds of solutions may be used for the plutonium impregnation bath and the following general criteria should be used in selecting the solution. The solution should not contain undesirable anions and cations such as halogen and metallic elements, e.g., iron, chromium, nickel, calcium and magnesium because the metallic elements could alter the properties of the fired pellet, or other elements in the pellet could form as a result of the irradiation which takes place in the reactor. Also, other elements having high neutron cross-sections capable of capturing neutrons should not be present in the solution. The media or liquid carrier for the plutonium should not be capable of dissolving the sintered uranium dioxide pellet, as for example, strong nitric acid. The solution should be stable with respect to plutonium at a relatively high concentration, i.e., the plutonium should be capable of being dissolved into the solution and should not tend to precipitate out with changes in temperature or other conditions. Further, the solution should be easily prepared from the shipping form and it preferably should comprise a nitrate solution.

Based on the foregoing, different solutions may be used as a carrier for the plutonium. Polymeric plutonium (IV) can form a polymer in solution. It becomes a sol or colloid of high concentration of polymeric form and therefore behaves like a solution. Solutions of plutonium having a valence of three or four combined with a phosphate, sulfate, sulfite, carbonate, citrate, tartrate, and the like are acceptable. Nitrate solutions consisting of plutonium in weak nitric acid or ammonium nitrates are acceptable. Also, alkyl phosphate extracts of plutonium such as tributyl phosphate or di-2-ethylhexyl phosphoric acid solutions in an organic diluent such as kerosene is acceptable.

In order to insure that the quantity of plutonium introduced into the urania pellet is controlled within specified limits, the open porosity of the uranium dioxide pellet must be controlled, and the concentration of plutonium in the impregnating solution likewise must be accurately controlled. As indicated above, the open porosity is controlled by the use of pore formers and the art is sufficiently developed to permit the fabrication or manufacture of uranium dioxide pellets having densities of specified percentages of the theoretical value. The concentration of plutonium in the solution is determined as it is in any solution but it should be capable of dissolving therein and not precipitate out under certain temperature or other conditions. By using non-destructive assay techniques based on gamma counting, the plutonium content can be determined with sufficient accuracy to sort the pellets into acceptable and unacceptable groups; an acceptable group being, for example, fuel pellets for a particular region in the reactor having a fissile content of 3.5 ± .12%. Gamma counting can further be used to reject low plutonium enrichment pellets for recycle, or to divide the output into two or three classes which can be used in different elements or in the ends or center of fuel rods, and the like.

The amount of fissile plutonium introduced into a pellet is a function of the pellet's open porosity and the solution strength relative to fissile isotope. To illustrate, a uranium dioxide pellet of the type adapted for use as a mixed oxide pellet would be constituted of uranium dioxide weighing 7.8 grams, for example, and having an initial density of 85% theoretical density (15% voids). If the required enrichment is to be 4% plutonium dioxide, then 0.33 grams plutonium dioxide or 0.29 grams plutonium will need to be implanted or impregnated into the exterior surface of the uranium dioxide pellet. Assuming a depth of penetration of 1.5 mm, the impregnating solution will need to be about 400 grams per liter in plutonium concentration. On the other hand, if a depth of penetration of 1.0 mm is more readily obtained, a solution containing 600 grams per liter plutonium would be required.

The plutonium solution strength can be controlled at a specified concentration by withdrawing fresh solution from a feed tank supply which has been adjusted and assayed. At the end of each impregnating cycle, the residual solution can be transferred to a receiver tank where it is collected and the reconstituted for use as feed. The time cycle used for achieving depths of penetration, will vary from about 10 minutes to about 60 minutes with temperatures ranging up to the boiling point of the carrier solution. Since a vacuum may need to be drawn on the pellets to help assure withdrawal of the air and easy penetration of solution into the void areas, a vacuum of about 1 atmosphere will remove the gases from the void areas on the pellet surface, and after the pellets are placed in the solution, a pressure of about 2-3 atmospheres may be applied to help assure that the plutonium will reach the desired depth of penetration.

In lieu of using the above-described process of utilizing a vacuum-pressure technique, together with soaking of the pellets in the solution, it will be apparent that the use of surfactants or other wetting agents to assist the capillary action of the solution in penetrating the pellet's surface may be resorted to as necessary to achieve good penetration. Pressure impregnation by the use of an autoclave constitutes an alternative method of impregnation and hot or boiling solutions may also be used for these purposes.

Distinct advantages are gained by incorporating plutonium into the outside surfaces of a uranium dioxide fuel pellet. The uranium dioxide will operate at a lower temperature and the center of the fuel therefore will operate at a temperature lower than uniformly enriched mixed oxide fuel pellets. Steep radial temperature gradients will not occur within the fuel and these factors should reduce the tendency of the fuel to slump as well as its tendency to densify in service. Since higher temperatures will appear on or adjacent to the outside surfaces of the pellet, higher clad-to-pellet temperature gradients will ensue during operation of these types of fuel pellets in a reactor.

The mixed oxide fuel pellet described above generally is a porous matrix pellet of natural uranium dioxide or thoria impregnated with a fissile material. Specifically, a natural uranium dioxide pellet impregnated with a plutonium solution and fired to make a mixed oxide pellet constitutes an advance in the art. Also, a thoria matrix pellet impregnated with $U^{233}$ which on firing becomes a thoria uranium dioxide mixed oxide pellet. It is desirable to have between 2% and 6% of plutonium for recycle type fuels but the use of mixed oxide fuel pellets of the type described herein may also be in a range of 15% to 25% plutonium for use in breeder reactors as distinct from light water reactors.

8

What is claimed is:

1. A mixed oxide fuel pellet for use in a nuclear reactor comprising a sintered pellet of uranium dioxide having pores dispersed throughout its body to provide an amount of uniform open porosity, said pellet being surface ground to open and expose pores adjacent to the pellet cylindrical surface, characterized in that a radioactive fissile material occupies the pores near the pellet surface to thereby provide a pellet of mixed oxide fuel particularly adapted for use in a nuclear reactor.

2. A fuel pellet as claimed in claim 1 characterized in that said fissile material includes plutonium.

3. A fuel pellet as claimed in claim 2, characterized in that the weight of plutonium ranges up to 25% of the total weight of the pellet.

4. A fuel pellet as claimed in claim 2 characterized in that the weight of plutonium ranges between 2%-6% of the total weight of the pellet.

5. A method of fabricating a mixed oxide fuel pellet as claimed in any of claims 1 to 4, wherein a cylindrical uranium dioxide fuel pellet is first manufactured with a predetermined amount of porosity therein, and the pellet's cylindrical surfaces are ground to open the pores near the pellet surface, characterized in that the pellet is then exposed to a plutonium solution to cause the entry of plutonium into pores adjacent the pellet's cylindrical surfaces, whereupon the pellet is dried to remove any excess carrier solution from the pellet surfaces, and heated to a temperature sufficient to effect the conversion of plutonium to plutonium dioxide.

6. A method according to claim 5, characterized in that said pellet is immersed in a plutonium solution and a vacuum is applied thereto to remove entrapped air or gases from the pellet pores adjacent the surface, and the pellet is returned to atmospheric pressure to cause the plutonium solution to flow into the pores of the pellet.

7. A method according to claim 6, characterized in that when the pellet is withdrawn from the solution it is drip-dried followed by a spray or dip rinse to remove any excess plutonium adhering to the pellet surface.

8. A method according to claim 5, 6 or 7, characterized in that the pellets are exposed to a temperature high enough to decompose the plutonium compound which has been implanted within the pellet's surface, said temperature being about 900°C to thereby convert the plutonium to plutonium dioxide.

9. A method according to any of claims 5 to 8, characterized in that the impregnated pellets are exposed to a final sinter temperature of about 1700°C.

European Patent
Office

**EUROPEAN SEARCH REPORT**

Application number

EP 80 30 2851

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | |
| X | <u>FR - A - 2 345 789</u> (ATOMIC ENERGY OF CANADA LIMITED) <br><br> * Claims 1-4; page 3, lines 2-12* <br> & GB - A - 1 550 279 <br> --- | 1,2,5 | G 21 C 3/62 |
| X | <u>FR - A - 2 302 571</u> (ATOMIC ENERGY OF CANADA LIMITED) <br><br> * Claims 1-6 * <br> & US - A - 4 020 131 <br> --- | 5,8,9 | |
| X | <u>DE - A - 1 929 513</u> (CANADIAN GENERAL ELECTRIC) <br><br> * Claims * <br> & GB - A - 1 228 317 <br> --- | 5 | TECHNICAL FIELDS SEARCHED (Int. Cl.³) <br><br> G 21 C 3/62 |
| A | <u>US - A - 3 789 013</u> (V. TRIGGIANI et al.) <br><br> * Claim 1 * <br> ----- | 5 | |

CATEGORY OF
CITED DOCUMENTS

X: particularly relevant
A: technological background
O: non-written disclosure
P: intermediate document
T: theory or principle underlying
   the invention
E: conflicting application
D: document cited in the
   application
L: citation for other reasons

&: member of the same patent
   family,
   corresponding document

The present search report has been drawn up for all claims

| Place of search | Date of completion of the search | Examiner |
|---|---|---|
| The Hague | 20-11-1980 | VAN DEN BULCKE |

EPO Form 1503.1  06.78